(19) Europäisches Patentamt

European Patent Office

Office européen des brevets

(11) **EP 0 557 592 B1**

(12) **EUROPÄISCHE PATENTSCHRIFT**

(45) Veröffentlichungstag und Bekanntmachung des Hinweises auf die Patenterteilung:
**12.02.1997 Patentblatt 1997/07**

(51) Int Cl.6: **G01C 25/00**, G01C 21/16, G01C 19/42, G01P 21/00

(21) Anmeldenummer: **92120364.2**

(22) Anmeldetag: **28.11.1992**

(54) **Einrichtung zum Kalibrieren einer Messeinrichtung**

Device for calibrating a measuring device

Dispositif pour calibrer un appareil de mesure

(84) Benannte Vertragsstaaten:
**DE ES FR GB IT**

(30) Priorität: **26.02.1992 DE 4205868**

(43) Veröffentlichungstag der Anmeldung:
**01.09.1993 Patentblatt 1993/35**

(73) Patentinhaber: **TELDIX GmbH**
**D-69046 Heidelberg (DE)**

(72) Erfinder:
• **Pickhard, Friedhelm**
**W-6930 Eberbach (DE)**
• **Liebscher, Franz**
**W-6900 Heidelberg 1 (DE)**

• **Neidhart,. Wolfgang**
**W-6900 Heidelberg (DE)**

(74) Vertreter:
**TER MEER - MÜLLER - STEINMEISTER & PARTNER**
**Mauerkircherstrasse 45**
**81679 München (DE)**

(56) Entgegenhaltungen:
**EP-A- 0 326 256          EP-A- 0 335 116**
**EP-A- 0 414 057          EP-A- 0 557 591**
**GB-A- 1 141 385          GB-A- 1 299 822**
**US-A- 3 731 543**

**Beschreibung**

Die Erfindung betrifft eine Einrichtung nach dem Oberbegriff des Patentanspruches 1.

In vielen Anwendungsfällen muß die Orientierung eines Körpers, beispielsweise einer Baugruppe, relativ zu einer Referenzorientierung in einem Referenzkoordinatensystem bestimmt werden können. Beispiele hierfür finden sich überall dort, wo Daten von koordinatenbezogenen Sensoren (z.B. Dopplerradar, inertiale Sensoreinheiten) verknüpft werden, oder im Maschinenbau, wo die Werkzeugorientierung einer numerisch gesteuerten Maschine unter Belastung bestimmt werden muß.

In der Luftfahrtindustrie ist es üblich, die Orientierung von Baugruppen oder von deren Aufnahmevorrichtungen bezogen auf eine Referenzfläche optisch, d.h. durch Autokollimation, zu vermessen.

Bei Kreiseln, die zum Lageregelungssystem eines dreiachsenstabilisierten Satelliten gehören, der sich in einer Umlaufbahn befindet, ist ein Verfahren zur Kalibrierung aus der DE 37 34 941 C2 bekannt. Dabei geht es um das Problem, daß die Kreisel eine zunächst unbekannte Drift aufweisen. Die Kalibrierung erfolgt unter Verwendung eines zweiachsigen Sensors, der die Richtung eines strahlenden Referenzobjektes im satellitenfesten Koordinatensystem mißt. In zwei nicht unmittelbar aufeinanderfolgenden Zeitintervallen wird der Satellit mit Hilfe seines Lagereglungssystems in zwei Referenzlagen ausgerichtet, die im satellitenfesten Koordinatensystem durch die unterschiedlichen, konstanten Sollrichtungen des Referenzobjektes definiert sind. Jeweils zu Beginn und am Ende der Zeitintervalle werden Meßwerte des Sensors registriert, welche die jeweilige tatsächliche Richtung des Referenzobjektes repräsentieren. Während der beiden Zeitintervalle werden die Zeitintegrale der Kreiselausgangssignale gebildet. Schließlich wird die Kreiseldrift bestimmt aus den Meßwerten des Sensors und den Zeitintegralen, welche die Kreiseldrift zuzüglich der jeweiligen momentanen Satellitenablage bezüglich der Referenzlage repräsentieren.

In der britischen Patentschrift 1 141 385 ist ein selbstkalibrierendes System für Navigationsinstrumente beschrieben, bei dem zwei Kreiselsysteme auf einer Plattform vorgesehen sind, von denen eines zu Kalibrierungszwecken nacheinander um 180° und um 90° um seine Spinachse geschwenkt wird, während bei dem anderen Kreiselsystem nur eine Schwenkung um 90° vorgenommen wird. Die in den verschiedenen Schwenklagen erfaßten Meßwerte erlauben die Ermittlung von Driftkoeffizienten.

In der britischen Patentschrift 1 299 822 ist eine gyroskopisch stabilisierte Plattform beschrieben, bei der nur ein Kreiselsystem (zwei Kreisel mit jeweils zwei Achsen) vorgesehen ist und das dementsprechend nicht Meßwertvektoren mit jeweils drei Komponenten liefern kann. Dementsprechend sind auch die Schwenkprozeduren und Schwenkachsen andere als bei den Kalibrierungsvorgängen bzw. der Einrichtung nach der Erfindung.

In einer parallelen Anmeldung EP-A-0 557 591 desselben Anmelders mit gleicher Priorität und vom selben Tag mit dem Titel "Einrichtung zur Bestimmung der relativen Orientierung eines Körpers" ist eine Einrichtung zur Durchführung eines Verfahrens angegeben, mit dem sich die relative Orientierung einer Baugruppe bezogen auf eine Referenzorientierung mittels inertialer Winkelgeschwindigkeitssensoren bestimmen läßt. Die Referenzorientierung kann beispielsweise durch eine Referenzfläche gegeben sein, die sich an einem Referenzkörper befindet. Die inertialen Winkelgeschwindigkeitssensoren werden im allgemeinen als Kreisel bezeichnet.

Bei dem Meßverfahren werden die Winkelgeschwindigkeiten des Referenzkörpers und diejenigen einer Orientierungssensoreinheit gemessen, welche von dem Referenzkörper zu dem Körper (hier: Baugruppe), der vermessen werden soll, bewegt wird. Aus beiden Meßinformationen wird die relative Orientierung des Körpers gegenüber dem Referenzkörper berechnet.

Damit ergeben sich folgende Vorteile:

Das zu vermessende System darf sich während der Messung bewegen; das gilt für den Referenzkörper allein, den zu vermessenden Körper sowie für beide zusammen. Außerdem müssen geophysikalische Größen wie z. B. die Erddrehrate nicht berücksichtigt werden, da nur die relative Orientierung berechnet wird, ohne auf ein erdfestes Koordinatensystem Bezug zu nehmen.

Zur näheren Erläuterung ist in den Zeichnungen folgendes dargestellt:

Figur 1: Exemplarisch drei Orientierungen der Koordinatensysteme der Meßvektoren einer Einrichtung nach der Erfindung;
Figur 2: der prinzipielle Aufbau der Einrichtung;
Figur 3: verschiedene Phasen des Meßvorganges;
Figur 4: Prinzipschaltbilder für die Berechnung der Komponenten für die Ausrichtung gemäß Figur 1;
Figur 5: der Aufbau der Einrichtung mit Schwenkmechanismen.

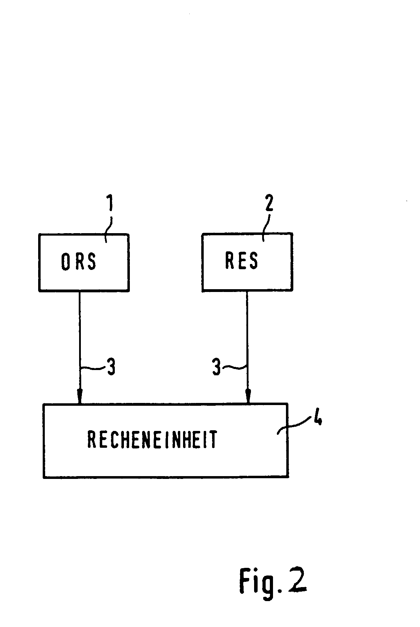

Die Einrichtung nach Fig. 2 besteht aus zwei Winkelgeschwindigkeitssensoren 1 und 2, die über Datenverbindungen 3 zur Übertragung der Meßwerte an eine Recheneinheit 4 angeschlossen sind. Der inertiale Winkelgeschwindigkeitssensor 1 dient als Orientierungssensoreinheit, während der andere Winkelgeschwindigkeitssensor 2 zur Bestimmung der Referenzorientierung vorgesehen ist. Beide liefern Winkelgeschwindigkeitsvektoren (Drehraten-Vektoren) an die Recheneinheit 4.

Die Referenzsensoreinheit 2 wird im folgenden mit RES und die Orientierungssensoreinheit 1 mit ORS abgekürzt. Die ORS und die RES sind jeweils durch eine Kreiseleinheit mit drei Kreiselmeßachsen (Kreiseltriade) realisierbar, die derart orientiert sind, daß innerhalb der Kreiseleinheit die Meßachsen nicht parallel zueinander und die drei Meßachsen einer Kreiseleinheit nicht in einer Ebene liegen, sondern vorzugsweise orthogonal angeordnet sind. Die ORS und die RES sind weiterhin mechanisch so aufzubauen, daß sie definiert und hinreichend starr untereinander und mit dem zu vermessenden Körper (z.B. durch Aufnahmevorrichtungen) sowie mit einem Referenzkörper (Referenzfläche) (z.B. mittels Adapter) mechanisch koppelbar sind.

Aufgabe der Recheneinheit 4 ist es, aus den von der ORS und der RES gemessenen Winkelgeschwindigkeiten (Drehraten) die relative Orientierung zwischen der Anfangsorientierung der ORS und deren Endorientierung zu berechnen, wobei die Anfangsorientierung bevorzugt mit der Orientierung des Referenzkörpers und die Endorientierung mit der Orientierung des zu vermessenden Körpers übereinstimmen oder doch wenigstens dem Referenzkörper und dem Körper eindeutig zugeordnet sind.

Zur Beschreibung des Meßverfahrens wird der Endorientierung entsprechend dem zu vermessenden Körper bzw. dessen Aufnahmevorrichtung ein kartesisches Koordinatensystem k_BGR zugeordnet, das bezogen auf den Körper (z.B. eine Baugruppe) eine feststehende Orientierung hat. Analog wird der Anfangsorientierung des Referenzkörpers bzw. der Referenzfläche ein Koordinatensystem k_REF zugeordnet. Die meßtechnische Aufgabe besteht nun darin, die Orientierung des Koordinatensystems k_BGR bezogen auf die Referenzorientierung zu bestimmen. Mathematisch läßt sich die Orientierung eines Koordinatensystems bezogen auf ein anderes Koordinatensystem durch verschiedene Parametersätze beschreiben. Üblich sind Eulerwinkel, Richtungskosinus-Matrizen oder Quaternionen (Mc Kern, "A study of transformation algorithmen for use in a digital computer", Masters thesis, T-493, Massachusetts Institute of Technology; Cambridge, 1968). Die verschiedenen Parameter sind ineinander umrechenbar. Hier wird die Quaternionendarstellung verwendet. Der RES bzw.ORS werden gedanklich kartesische Koordinatensysteme k_RES bzw. k_ORS zugeordnet, und die von der RES und der ORS gemessenen Winkelgeschwindigkeiten werden bezogen auf diese Koordinatensysteme mit w_RES bzw. w_ORS bezeichnet.

Aufgabe der Recheneinheit ist es, aus den von der ORS und der RES gemessenen Winkelgeschwindigkeiten die relative Orientierung des Körpers (das Orientierungsquaternion q_[BGR;REF] bzw. eine geeignete andere Parameterdarstellung für die Orientierung) zu ermitteln. Mathematisch erfordert dies die Lösung der folgenden Quaternionen-Differentialgleichung in geeigneter Art und Weise:

$$\dot{q}\_[ORS;RES] = 0,5\ [\ q\_[ORS;RES] \odot w\_RES\ -w\_ORS \odot q\_[ORS;RES]] \tag{1}$$

Darin bedeuten:

q_[ORS;RES]:     Quaternion zur Beschreibung einer Vektortransformation vom Koordinatensystem der RES ins Koordinatensystem der ORS,

w :     Winkelgeschwindigkeit-Vektor,

$\odot$     : Quaternionenmultiplikation.

Anstelle dieser Quaternionen-Differentialgleichung kann selbstverständlich auch eine Euler-Winkel-Differentialgleichung oder eine Differentialgleichung anderer zur Beschreibung einer Orientierung geeigneter Parameter verwendet werden.

Algorithmen zur zeitdiskreten Lösung einer Differentialgleichung der obengenannten Art - auch dann, wenn die Ausgangsgrößen der Winkelgeschwindigkeitssensoren Winkelinkremente bzw. Drehraten darstellen - sind in der Inertialtechnik bekannt und zum Beispiel in der oben angegebenen Literaturstelle von Mc Kern beschrieben.

Die Vermessung der Orientierung eines Körpers (oder dessen Aufnahmevorrichtung) läßt sich in drei Phasen gliedern:

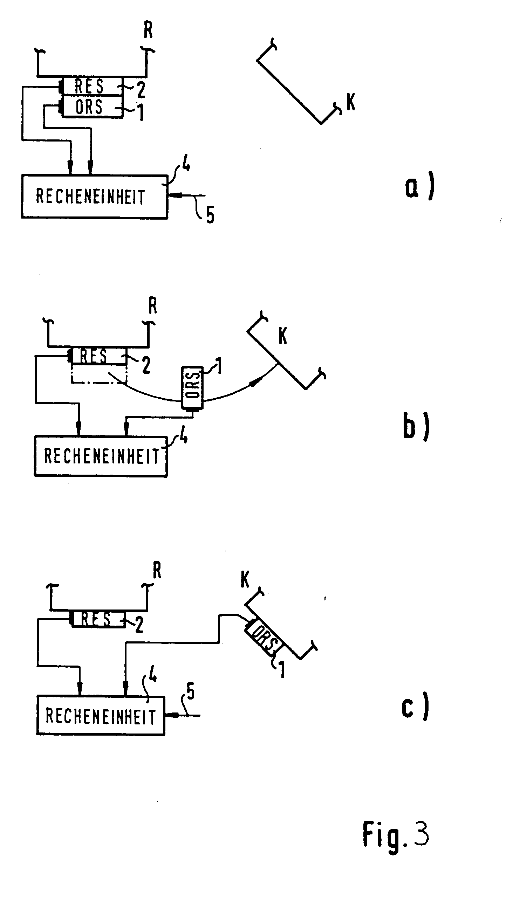

I. Die ORS und die RES sind mechanisch hinreichend starr mit dem Referenzkörper (Referenzfläche) verbunden, vgl. die Anfangsorientierung in Fig. 3a, wo sich die ORS 1 und die RES 2 gemeinsam am Referenzkörper R befinden. Die Recheneinheit 4 wird über einen Eingang 5 zur Lösung der Quaternionendifferentialgleichungen initialisiert und zum Zeitpunkt t0 gestartet.

II. Die ORS 1 wird entkoppelt und zu dem zu vermessenden Körper K geführt, während die RES 2 mit dem Referenzkörper R starr verbunden bleibt, vgl. Fig. 3b. Die Recheneinheit 4 integriert die Quaterionendifferentialgleichung gemäß Gleichung (1).

III. Die ORS 1 wird an den zu vermessenden Körper (bzw. dessen Aufnahmevorrichtung) gekoppelt (Endorientierung) und die Integration der Gleichung (1) gestoppt, und zwar wieder über den Eingang 5 zum Zeitpunkt t1, wie in Figur 3c dargestellt.

Unter der Voraussetzung, daß in Phase I die Koordinatensysteme k_RES, k_ORS und k_REF sowie in Phase III die Koordinatensysteme k_ORS und k_BGR parallel zueinander orientiert sind, beschreibt die Lösung der von der Recheneinheit während der Phase II integrierten Quaternionen-Differentialgleichung (1) die Orientierung des Koordinatensystems des zu vermessenden Körpers (Baugruppe oder Aufnahmevorrichtung) in Bezug auf das Referenzkoordinatensystem in Form einer Quaternion Δq_[BGR;REF]. Es gilt unter den oben angegebenen Voraussetzungen:

$$\Delta q\_[ORS;RES] = \int_{to}^{t1} \dot{q}\_ [ORS;RES]\, dt = \Delta q\_ [BGR;REF] \qquad (2),$$

wobei die Buchstabenfolgen BGR und REF für den beweglichen Körper (Baugruppe) bzw. den Referenzkörper stehen.

Wie schon erwähnt, sind geeignete Lösungsverfahren zur Integration dieser Differentialgleichung bekannt.

Sofern die oben angegebenen Bedingungen bezüglich der Orientierung der Koordinatensysteme in den Phasen I und III nicht gegeben sind, so sind doch die Beziehungen untereinander aufgrund der Konstruktionsgegebenheiten bekannt und können z.B. durch folgende Quaternionen beschrieben werden:

$$k\_RES = q\_[RES;REF](t0) \odot (k\_REF \odot q\_*[RES;REF](t0)) \qquad (3a)$$

$$k\_ORS = q\_[ORS;RES](t0) \odot k\_RES \odot q\_*[ORS;RES](t0) \quad (nur\ Phase\ I) \qquad (3b)$$

$$k\_BGR = q\_[BGR;ORS](t1) \odot k\_ORS \odot q\_*[BGR;ORS](t1) \quad (nur\ Phase\ III) \qquad (3c)$$

(*= konjugiert komplex).

Für das gesuchte Orientierungsquaternion Δ q_[BGR;REF] folgt unter Berücksichtigung der Beziehungen (3a,b, c) und (1):

$$\Delta q\_[BGR;REF] = q\_[BGR;ORS](t=t1) \odot (/\Delta q\_[ORS;RES])$$

$$\odot q\_[RES;REF](t0) \qquad (4)$$

Die Quaternionen-Differentialgleichung gemäß (1) muß zum Zeitpunkt t0 mit dem Quaternion q_[ORS;REF](t0) initialisiert werden. Dieses Quaternion bzw. die dadurch beschriebene Orientierung ist natürlich aufgrund der konstruktiven Gegebenheiten bekannt.

Eine wesentliche Genauigkeitseinschränkung für das zuvor beschriebene Meßverfahren ist bedingt durch den während einer Messung zeitlich konstanten Anteil der Kreiseldrift, speziell der sogenannten "run to run"-Drift. Das ist derjenige Anteil der Kreiseldrift, der nach jedem Einschalten des Kreiselsystems, also bei jedem Kreisllauf in unterschiedlichem Maße, also in Abweichung von der durchschnittlichen Kreiseldrift auftritt und im Gegensatz zur durchschnittlichen Kreiseldrift nicht ohne weiteres kompensierbar ist.

Aufgabe der Erfindung ist es, eine Einrichtung anzugeben, mit dem der "run to run"-Offset kalibriert werden kann und das generell für Meßeinrichtungen anwendbar ist, die Meßwerte liefern, die sich auf Bewegungen in einem Inertialsystem beziehen und mit einem Offset behaftet sind.

Diese Aufgabe wird gelöst durch eine Einrichtung nach Patentanspruch 1.

Die Kalibration läßt sich z.B. auch bei Flugzeugen zur Kalibration von INS-Systemen (inertialen Navigationssystemen) anwenden, sofern sie redundant ausgelegt sind, und ist auch zur Kalibration von Beschleunigungsmesser-Biasen, also zur Kalibration des Nullpunktfehlers (Offset-Fehlers) von Beschleunigungsmessern geeignet.

Die Anwendung der Einrichtung wird am Beispiel der Kreiseldrift beschrieben, gilt aber auch für andere Meßgrößen mit Offsetfehlern analog, insbesondere für Beschleunigungsmeßwerte. Die von der ORS und der RES gelieferten Meßvektoren lassen sich unter Berücksichtigung des konstanten Driftanteils bezogen auf die Koordinatensysteme k_ORS und k_RES wie folgt beschreiben:

$$w\_ORS\_M = w\_ORS + d\_ORS \qquad (5a)$$

$$w\_RES\_M = w\_RES + d\_RES \qquad (5b)$$

Darin bedeuten:

w: Winkelgeschwindigkeit (Winkelinkrement)-Vektoren der Orientierungssensoreinheit (ORS) bzw. Referenzsensoreinheit (RES)
d: Drift (Driftinkrement)-Vektor der "run to run"-Drift
M: Postfix, das einen Meßwert bzw. die auf die KoordinatenSysteme k_ORS bzw. k_RES transformierten Meßwerte kennzeichnet.

Im folgenden wird vorausgesetzt, daß die Koordinatensysteme k_ORS und k_RES bezogen auf die Kreiselmeßachsen eine zeitlich feststehende Orientierung haben; dies ist keine Einschränkung, da es sich um gedankliche Koordinatensysteme handelt.

Die Koordinatensysteme k_ORS und k_RES werden nun für verschiedene Meßschritte so umorientiert, daß der Summenvektor d+ entsprechend der Gleichung

$$d+ = d\_RES + d\_ORS \qquad (6a)$$

und der Differenzvektor d- entsprechend der Gleichung

$$d- = d\_RES - d\_ORS \qquad (6b)$$

(beziehungsweise deren Komponenten) meßtechnisch erfaßbar sind. In diesen Gleichungen stellen d_ORS und d_RES die Drift-(Driftinkrement-)Vektoren der ORS bzw. RES dar.

Die Umorientierung kann erreicht werden, indem die Koordinatensysteme k_RES und k_ORS ausgehend von einer Ursprungsorientierung gegeneinander gedreht werden und in definierten Orientierungen die Differenz bzw. die Summe der Meßvektoren (-Komponenten) d_RES, d_ORS berechnet werden. Hierbei sind die ORS und die RES mechanisch starr und hinreichend definiert zu koppeln.

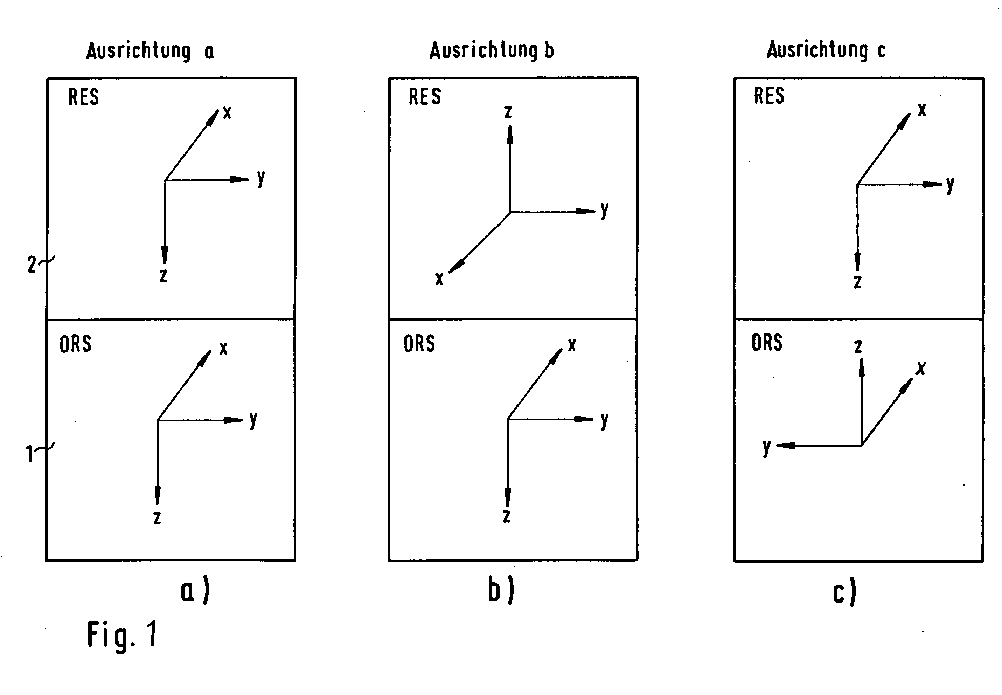

In Fig. 1 sind exemplarisch drei Orientierungen für die Koordinatensysteme k_ORS und k_RES angegeben. Fig. 1a zeigt die Ursprungsorientierung, von der ausgehend die Umorientierungen nach Fig. 1b und 1c vorgenommen werden, um jeweils die erforderlichen Messungen vorzunehmen. In der Ausrichtung a (Ursprungsorientierung) sind die Koordinatensysteme k_ORS und k_RES parallel zueinander orientiert. Da beide Systeme starr miteinander gekoppelt sind, ergibt die Differenz der gemessenen Winkelgeschwindigkeiten die Differenz der Driftvektoren d_RES - d_ORS.

Nach der ersten Umorientierung sind in der Ausrichtung nach Fig. 1b die x- und z-Achsen der Koordinatensysteme k_ORS und k_RES jeweils antiparallel zueinander orientiert. Durch Summenbildung der Meßkomponenten x, z der ORS und der RES erhält man die Summen der Driftkomponenten

$$d\_RES\ (x) + d\_ORS\ (x)\ bzw.\ d\_RES\ (z) + d\_ORS\ (z).$$

Nach einer Umorientierung, die zu der Ausrichtung nach Fig. 1c führt, sind die y-Achsen der Koordinatensysteme k_ORS und k_RES antiparallel zueinander orientiert. Die Summe der y-Meßkomponenten der ORS und der RES ergibt die Summe der y-Driftkomponenten d_RES (y) + d_RES (y).

Mit Hilfe von d+ und d- sowie der folgenden Gleichungen 7a und 7b lassen sich dann die Driftvektoren d_RES und d_ORS einfach berechnen und die Meßgrößen damit kalibrieren:

$$d\_RES = 0{,}5 \cdot (d+ + d-) \qquad (7a)$$

$$d\_ORS = 0,5 \cdot (d+ - d-) \tag{7b}$$

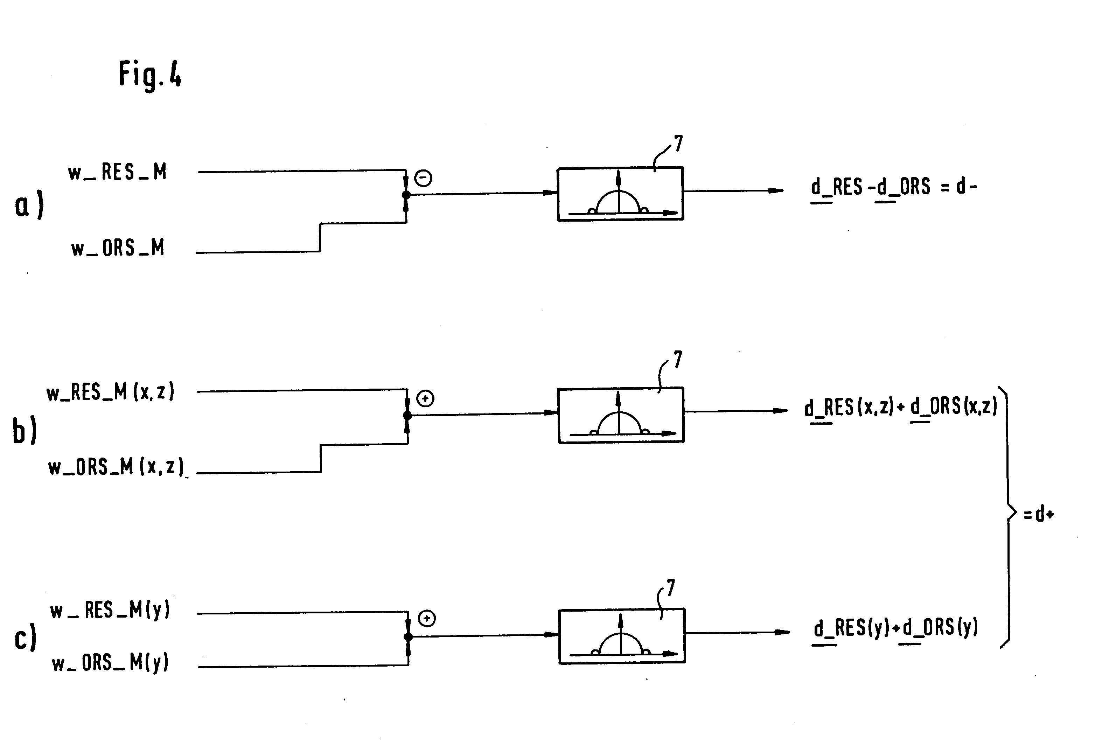

Für die Berechnung der Komponenten für die Ausrichtungen gemäß Fig. 1 sind in den Figuren 4a bis 4c Prinzipschaltbilder dargestellt. Fig. 4a gehört zur Ausrichtung a der Fig. 1, und entsprechend gehören die Figuren 4b, 4c zur Ausrichtung b bzw. c der Fig. 1. Den Summierern in den Figuren 4b, 4c bzw. dem Differenzbildner in Fig. 4a ist jeweils eine Einrichtung 7 zur Mittelwertbildung nachgeschaltet, die zur Unterdrückung von sogenannten "short-term" und "random-walk"-Driftanteilen dienen. Von den über die durchschnittliche Drift hinausgehenden Anteilen sind die "short-term"-Anteile diejenigen, die noch korreliert sind, während die "randomwalk"-Driftanteile nicht mehr korreliert sind. Die Mittelungszeit der Mittelwertbildner 7 ist abhängig von der Varianz der Störgrößen und vom zulässigen Fehler bei der Driftberechnung.

Ein wesentlicher Vorteil dieses Verfahrens ist, daß aufgrund der Differenzbildung die Umgebungsdynamik w_ORS bzw. w_RES herausfällt.

Sofern die Ausgangsgrößen der Sensoreinheiten Winkelinkremente sind, werden mit dem zuvor beschriebenen Verfahren Driftinkremente berechnet. Dann gilt das in Fig. 4 dargestellte Verfahren zur Berechnung der Summen- bzw. Differenzdriftvektor-Komponenten entsprechend auch für eine zeitdiskrete Signalverarbeitung.

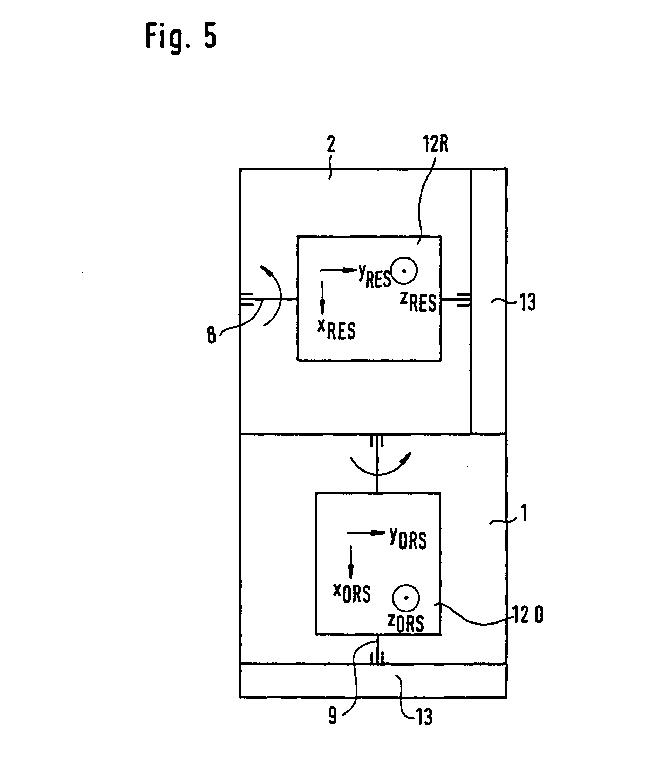

Um die Umorientierung der Koordinatensysteme von der Ursprungsorientierung entsprechend der Ausrichtung a der Fig. 1 in die anderen Ausrichtungen b, c nach den Figuren 1b, lc vornehmen zu können, können die ORS und die RES nach Fig. 5 aufgebaut sein.

Hier sind die RES 2 und die ORS 1 jeweils mit einem Schwenkmechanismus 13 ausgerüstet, der es erlaubt, die jeweilige Kreiseltriade 12R bzw. 120 um 180° um eine quer zur Koordinate $z_{RES}$ bzw. $y_{ORS}$ stehende Achse 8 bzw. 9 zu schwenken. Eingezeichnet ist die jeweilige Lage der y- und z-Koordinaten entsprechend der Ursprungsorientierung, wie in Figur la angegeben. Durch Umklappen jeweils einer der Kreiseltriaden 12R bzw. 120 lassen sich die Ausrichtungen b bzw. c nach Figur 1 erzielen, in denen die notwendigen Messungen vorgenommen werden, wobei die RES und die ORS mechanisch starr miteinander gekoppelt bleiben, wie in Figur 5 gezeigt. Mit diesen Meßwerten kann dann die "run to run"-Drift kalibriert werden.

Die Achsen 8 und 9 sind relativ zu den Korrdinaten $z_{RES}$, $y_{RES}$, $z_{ORS}$ usw., beispielsweise zu den Meßachsen der Kreiseltriaden, so ausgerichtet, daß durch das Umklappen einer Kreisltriade zwei Koordinaten in ihrer Richtung umgekehrt werden und durch das Umklappen der anderen Kreiseltriade eine andere Koordinate in ihrer Richtung umgekehrt wird.

Soll die Einrichtung zur Kalibration von Beschleunigungsmessern angewendet werden, so sind diese in Figur 5 an die Stelle der Kreiseltriade zu setzen. Insbesondere beim redundanten Systemen, bei welchen Sensoreinheiten mehrfach vorhanden sind, bietet sich das Kalibrationsverfahren als eine einfache Lösung an, beispielsweise in Flugzeugnavigationsanlagen.

Von besonderem Vorteil ist es, daß die RES und die ORS, wie in Figur 5 verdeutlicht, identisch aufgebaut sein können. Dies erleichtert auch die Anwendung in redundanten Systemen.

**Patentansprüche**

1. Einrichtung zum Kalibrieren einer Meßeinrichtung, die Meßwerte liefert, die sich auf Bewegungen in einem Inertialsystem beziehen und mit einem Offset behaftet sind, mit einem Paar von Sensoreinheiten (1, 2), die jeweils ein Tripel von Meßwerten für einen Meßwertvektor erzeugen, enthaltend:

   a) Mittel, um die erste und zweite der beiden Sensoreinheiten (1, 2) in ihren Ursprungsorientierungen und in Umorientierungslagen mechanisch starr miteinander koppeln zu können,

   b) Mittel, um die erste Sensoreinheit (1) um 180° aus ihrer Ursprungsorientierung um eine erste Schwenkachse (9), die senkrecht zu einer der Meßachsen dieser Sensoreinheit (1) verläuft, in eine erste Umorientierungslage schwenken zu können,

   c) Mittel, um die zweite Sensoreinheit (2) um 180° aus ihrer Ursprungsorientierung um eine zweite Schwenkachse (8), die senkrecht zu einer der Meßachsen dieser zweiten Sensoreinheit (2) und senkrecht zur ersten Schwenkachse (9) verläuft, in eine zweite Umorientierungslage schwenken zu können,

   d) einen Differenzbildner, um aus zwei Tripeln, die aus Meßwerten für jeweils einen Meßwert-Vektor bestehen und die in den Ursprungsorientierungen der Sensoreinheiten (1, 2) von den beiden Sensoreinheiten ermittelt werden, einen Differenz-Vektor (d-) bilden zu können,

e) einen Summierer, um nach Schwenken nur der zweiten Sensoreinheit (2) um 180° um die zweite Schwenkachse (8) und anschließendem Ermitteln von jeweils zwei von drei Meßwert-Komponenten als Komponenten-Paar durch die Sensoreinheiten (1, 2), diese beiden Komponenten-Paare zu einem Summenvektor summieren zu können,

f) einen Summierer, um nach Schwenken der ersten Sensoreinheit (1) um 180° um die erste Schwenkachse (9) und Ermitteln jeweils der dritten Meßwert-Komponente durch die Sensoreinheiten diese beiden dritten Meßwert-Komponenten zu einem Summenwert summieren zu können,

g) einen Summenbildner, um aus den Komponenten-Paaren und den dritten Meßwert-Komponenten einen Summen-Vektor (d+) bilden zu können, der sich aus Komponenten-Paaren antiparallel liegender Meßwert-Komponenten zusammensetzt und der zusammen mit dem Differenz-Vektor (d-) für die Sensoreinheiten (1, 2) jeweils einen Drift-Vektor zur Kalibrierung bestimmt.

## Claims

1. Device for calibrating a measuring device which supplies measured values which relate to movements in an inertial system and are affected by an offset, having a pair of sensor units (1,2) which respectively generate a triplet of measured values for a measured-value vector, containing:

   a) means which permit the first and second of the two sensor units (1,2) to be coupled to one another in a mechanically rigid fashion in their initial orientations and in re-orientated positions,
   b) means which permit the first sensor unit (1) to be pivoted by 180° from its initial orientation about a first pivot axis (9), which extends at right angles to one of the measuring axes of this sensor unit (1), into a first re-orientated position,
   c) means which permit the second sensor unit (2) to be pivoted by 180° from its initial orientation about a second pivot axis (3), which extends at right angles to one of the measuring axes of this second sensor unit (2) and at right angles to the first pivot axis (9), into a second re-orientated position,
   d) a subtracter which permits the difference vector (d-) to be formed from two triplets, which comprise measured values for respectively one measured-value vector and which are determined in the initial orientations of the sensor units (1,2) by the two sensor units,
   e) a summer which, after pivoting of only the second sensor unit (2) by 180° about the second pivot axis (8) and subsequent determination of respectively two or three measured-value components as a component pair by the sensor units (1,2), permits these two component pairs to be summed to form a sum vector,
   f) a summer which, after pivoting of the first sensor unit (1) by 180° about the first pivot axis (9) and determination respectively of a third measured-value component by the sensor units, permits these two third measured-value components to be summed to form a sum value, and
   g) an adder which permits the formation from the component pairs and the third measured-value components of a sum vector (d+), which is composed of component pairs of measured-value components situated in an anti-parallel fashion, and which together with the difference vector (d-) for the sensor units (1,2) respectively determine a drift vector for the purpose of calibration.

## Revendications

1. Dispositif pour calibrer un appareil de mesure fournissant des valeurs de mesure, qui se rapportent à des mouvements dans un système inertiel et qui présentent un décalage, comprenant une paire de blocs détecteurs (1, 2) qui produisent chacun un triplet de valeurs de mesure pour un vecteur de mesure, comportant :

   a) des moyens pour pouvoir accoupler, mécaniquement de manière rigide entre eux, le premier et le second des deux blocs détecteurs (1, 2) dans leur orientation d'origine et dans des positions d'orientation changée,
   b) des moyens, pour pouvoir faire pivoter le premier bloc détecteur (1) de 180°, autour d'un premier axe de pivotement (9) qui s'étend perpendiculairement à l'un des axes de mesure de ce bloc détecteur (1), depuis son orientation d'origine pour atteindre une première position d'orientation changée,
   c) des moyens, pour pouvoir faire pivoter le second bloc détecteur (2) de 180°, autour d'un second axe de pivotement (8) qui s'étend perpendiculairement à l'un des axes de mesure de ce second bloc détecteur (2) et

EP 0 557 592 B1

perpendiculairement au premier axe de pivotement (9), depuis son orientation d'origine pour atteindre une seconde position d'orientation changée,

d) un élément de formation de différence, pour former un vecteur de différence (d-) à partir de deux triplets qui se composent de valeurs de mesure chacune pour un vecteur de valeur de mesure et qui, dans les orientations d'origine des blocs détecteurs (1, 2), sont déterminés par les deux blocs détecteurs,

e) un additionneur, pour pouvoir, après le pivotement de 180° autour du second axe de pivotement (8) qui n'est effectué que par le second bloc détecteur (2) et qui est suivi par la détermination à chaque fois de deux de trois composantes de valeur de mesure en tant que paire de composantes, par l'intermédiaire des blocs détecteurs (1, 2), totaliser ces deux paires de composantes en un vecteur cumulé,

f) un additionneur, pour pouvoir, après le pivotement de 180° autour du premier axe de pivotement (9) qui est effectué que par le premier bloc détecteur (1) et après la détermination à chaque fois de la troisième composante de valeur de mesure par l'intermédiaire des blocs détecteurs, totaliser ces deux troisièmes composantes de valeur de mesure en une valeur cumulée,

g) un élément de totalisation pour former, à partir des paires de composantes et des troisièmes composantes de valeur de mesure, un vecteur cumulé (d+) qui se compose de paires de composantes de composantes de valeur de mesure situées de manière antiparallèle et qui définit, conjointement avec le vecteur de différence (d-) pour les blocs détecteurs (1, 2), à chaque fois un vecteur de dérive servant au calibrage.

Ausrichtung a      Ausrichtung b      Ausrichtung c

a)      b)      c)

Fig. 1

EP 0 557 592 B1

Fig. 2

a)

b)

c)

Fig.3

Fig. 4

a)

w_RES_M

w_ORS_M

d_RES - d_ORS = d-

b)

w_RES_M(x,z)

w_ORS_M(x,z)

d_RES(x,z) + d_ORS(x,z)

c)

w_RES_M(y)

w_ORS_M(y)

d_RES(y) + d_ORS(y)

= d+

EP 0 557 592 B1

# Fig. 5

13